Europäisches Patentamt

European Patent Office

Office européen des brevets

(11) Publication number: **0 202 707**

A1

## (12) EUROPEAN PATENT APPLICATION

(21) Application number: 86200770.5

(22) Date of filing: 02.05.86

(51) Int. Cl.⁴: **C08L 35/06** , C08L 25/12 , C08L 25/16 , C08L 51/04 , C08L 55/02

(30) Priority: 03.05.85 NL 8501253

(43) Date of publication of application:
26.11.86 Bulletin 86/48

(84) Designated Contracting States:
AT BE CH DE FR GB IT LI NL SE

(71) Applicant: STAMICARBON B.V.
Mijnweg 1
NL-6167 AC Geleen(NL)

(72) Inventor: Roerdink, Eize
Laathofstraat 15
NL-6191 GD Beek (L)(NL)
Inventor: Bruls, Wilhelmus Gerardus Marie
Graaf Wolter Hoenstraat 32
NL-6243 BE Geulle(NL)
Inventor: van Asperen, Pieter Jan
Op de Windhaspel 9
NL-6181 LC Beek (L)(NL)

(74) Representative: Hoogstraten, Willem Cornelis
Roeland et al
OCTROOIBUREAU DSM Postbus 9
NL-6160 MA Geleen(NL)

(54) Polymer composition.

(57) The invention relates to a polymer composition on the basis of a graft copolymer and a copolymer of styrene and maleic anhydride, comprising:

A. a copolymer of styrene and maleic anhydride having a maleic anhydride content of 24-32 wt.%,

B. a graft copolymer obtained by polymerization of a vinyl aromatic compound and acrylonitrile in the presence of a rubber, the rubber content of the graft copolymer being at least 55 wt.%, and, optionally,

C. a copolymer of styrene and acrylonitrile, the ratios between the components of the polymer composition being such that the maleic anhydride content of the composition is 8-20 wt.%.

This polymer composition gives a good HDT and/or Vicat temperature in combination with a high impact strength.

## POLYMER COMPOSITION

The invention relates to a polymer composition on the basis of a graft copolymer and a copolymer of styrene and maleic anhydride.

Copolymers of styrene and maleic anhydride are known plastics that possess an extremely high dimensional stability under heat. Depending on the maleic anhydride content, the heat distortion temperature (HDT) may be between 100 and 165¤C. The impact strength of this type of plastics, however, is low. Objects made of them generally are brittle. From US patent 3,642,949 it is known to mix styrene-maleic anhydride copolymers with a graft copolymer of a vinyl aromatic compound and a nitrile compound on a rubber. According to said patent, use is made of a copolymer of styrene and, for instance, maleic anhydride with a maleic anhydride content of 5-35 wt.%, in combination with a graft copolymer having a rubber content of 30-75 wt.%

From British patent 1,315,219 polymer compositions are known that consist on the one hand of a styrene-maleic anhydride copolymer with a rather low maleic anhydride content and on the other of a styrene-acrylonitrile graft copolymer.

The polymer compositions described in these publications from the early seventies did, however, not lead to a commercially sucessful product, perhaps because the various parameters playing a part in the preparation of the compositions are extremely critical.

The subject invention relates to a polymer composition on the basis of a styrene-maleic anhydride copolymer and a graft copolymer of a vinyl aromatic compound and acrylonitrile on a rubber, yielding on the one hand a good HDT and/or Vicat temperature, while on the other hand the impact strength of the product made of such a polymer composition is extremely good.

The polymer composition according to the present invention is characterized in that it comprises:

A. a copolymer of styrene and maleic anhydride having a maleic anhydride content of 24-32 wt.%,

B. a graft copolymer obtained by polymerization of a vinyl aromatic compound and acrylonitrile in the presence of a rubber, the rubber content of the graft copolymer being at least 55 wt.%, and, optionally,

C. a copolymer of styrene and acrylonitrile, the ratio between the components in the polymer composition being such that the maleic anhydride content of the composition is 8-20 wt.%.

It has, surprisingly, been found that a highly specific selection of the maleic anhydride content of the styrene-maleic anhydride copolymer, of the rubber content of the graft copolymer, and of the maleic anhydride content of the polymer composition, results in a polymer composition with an optimal balance of properties. For an expert, this is unexpected, for there already are very many publicaties in the field of polymer compositions on the basis of the combination of the proportionally high content of maleic anhydride and the high rubber content. One would expect the processability and the thermal stability during processing to be minimal. The latter factor would lead to a product having only mediocre mechanical properties and an unacceptable appearance.

The polymer composition preferably contains 10-80 parts by weight of styrene-maleic anhydride copolymer, 20-90 parts by weight of graft copolymer and, optionally, 5-50 parts by weight of styrene-acrylonitrile copolymer.

The ratios between the several components are determined by the desired properties of the end product. If the impact strenght needs not be very high, a higher styrene-acrylonitrile copolymer content may be chosen.

There is advantage in applying a graft copolymer having a rubber content of at most 80 wt.%, more in particular of 60-80 wt.%. This rubber is preferably chosen from the group consisting of polybutadiene, butadiene-styrene rubber, butadiene acrylonitrile rubber, butadiene acrylate rubber, acrylate rubber, ethylene-propylene rubber, ethylene-propylene diene rubber, and mixtures of two or more of these rubbers.

The graft copolymer can be prepared in the known way, e.g. by emulsion, suspension, solution and/or mass polymerization. The customary additives are applied, such as emulsifiers, suspending agents, free radical donors, optionally in combination with a redox system, chain length regulators, stabilizers, etc.

As vinyl aromatic compound in the graft copolymer, use is generally made of styrene or a styrene derivative, such as α-methyl styrene.

The styrene-maleic anhydride copolymer can be prepared in the manner customary for a statistic, non-alternating styrene-maleic anhydride copolymer. A possible process is described by Hanson and Zimmermann, Ind. Chem. Eng. Vol.

49, No. 11, November 1957, pp. 1803 through 1807. However it is done, it is essential that the polymerization be effected continuously with proper stirring, since otherwise an alternating copolymer of styrene and MA is obtained, possibly in combination with a styrene homopolymer.

The styrene-maleic anhydride copolymer may contain 0.1-5 wt.% of other monomers, such as acrylonitrile or methylmethacrylate. This, however, is not necessary. The styrene-maleic anhydride copolymer will generally be polymerized by solution or mass polymerization, since the water-containing emulsion or suspension systems give rise to hydrolysis of maleic anhydride to free maleic acid, which is undesirable.

The styrene-acrylonitrile copolymer can be prepared in a known way, for instance by mass, solution, emulsion or suspension polymerization or combination of these.

The polymer composition can be prepared in the customary way by mixing of the various components, e.g. in the melt in a single-or double-screw extruder, a Brabender, or a comparable mixing device. In this phase of the preparation process of the polymer composition, the customary additives can be incorporated in the polymer composition. Examples of this type of additive are colourants, pigments, fillers, whether or not reinforcing, fibres, stabilizers, lubricants, antioxidants, plasticizers, mould release agents, etc.

Examples I-III

On the basis of a graft copolymer obtained by polymerization of styrene and acrylonitrile in the presence of polybutadiene, which graft copolymer contains 80 wt.% rubber, and a styrene-maleic anhydride copolymer with 27.5 wt.% of MA, three polymer compositions were prepared by mixing of the various components in the presence of the customary additives, granulating and injection moulding. The composition and results are included in Table A.

## TABLE A

| Example | ABS parts by wt. | SMA parts by wt. | Vicat, 5 kg unannealed °C | Notched Izod kJ/m$^2$ | Tg °C |
|---------|------------------|------------------|---------------------------|-----------------------|-------|
| I | 47 | 53 | 122.5 | 28.2 | 157 |
| II | 31 | 69 | 140 | 18.9 | 158 |
| III | 19 | 81 | 149 | 9.9 | 160 |

Example IV

On the basis of the same SMA as in Example I and a graft copolymer of 31 parts by weight of a mixture of styrene and acrylonitrile on 69 parts by weight of EPDM rubber (AES), a polymer composition was prepared on the basis of 32 parts by weight of the graft copolymer and 68 parts by weight of SMA. The Vicat temperature was 124°C, the glass transition temperature (Tg) was 154°C, and the impact strength 19.1 kJ/m$^2$.

## Claims

1. Polymer composition on the basis of a graft copolymer and a copolymer of styrene and maleic anhydride, comprising:

A. a copolymer of styrene and maleic anhydride having a maleic anhydride content of 24-32 wt.%,

B. a graft copolymer obtained by polymerization of a vinyl aromatic compound and acrylonitrile in the presence of a rubber, the rubber content of the graft copolymer being at least 55 wt.%, and, optionally,

C. a copolymer of styrene and acrylonitrile, the ratios between the components of the polymer composition being such that the maleic anhydride content of the composition is 8-20 wt.%.

2. Polymer composition according to claim 1, comprising 10-80 parts by weight of the styrene-maleic anhydride copolymer, 20-90 parts by weight of the graft copolymer and 20-90 parts by weight of the styrene-acrylonitrile copolymer.

3. Polymer composition according to either of claims 1 and 2, characterized in that the rubber content of the graft copolymer is between 60-80 wt.%.

4. Polymer composition according to claims 1-3, characterized in that the rubber is chosen from the group consisting of polybutadiene, butadiene-styrene rubber, butadiene-acrylonitrile rubber, butadiene acrylate rubber, acrylate rubber, ethylene-propylene rubber, ethylene-propylene diene rubber, and mixtures of two or more of these rubbers.

5. Polymer composition according to any of claims 1-4, characterized in that the vinyl aromatic compound applied in the polymerization of the graft copolymer is chosen from the group consisting of styrene, α-methylstyrene, and mixtures thereof.

6. Polymer composition according to any of claims 1-5, characterized in that the rubber content of the polymer composition is between 10 and 40 wt.%.

7. Polymer composition according to any of claims 1-6, characterized in that the customary additives are incorporated in the composition.

8. Polymer composition substantially as described and elucidated on the basis of the examples.

9. Object made wholly or partly of a polymer composition according to one or more of claims 1-8.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 137 295 (BASF)<br>* Claims *<br><br>----- | 1-9 | C 08 L 35/06<br>C 08 L 25/12<br>C 08 L 25/16<br>C 08 L 51/04<br>C 08 L 55/02 |

TECHNICAL FIELDS
SEARCHED (Int. Cl.4)

C 08 L

The present search report has been drawn up for all claims

| Place of search | Date of completion of the search | Examiner |
|---|---|---|
| THE HAGUE | 07-08-1986 | FOUQUIER J.P. |